Europäisches Patentamt

European Patent Office

Office européen des brevets

(19)

(11) Veröffentlichungsnummer: **0 006 595**
**A1**

(12) # EUROPÄISCHE PATENTANMELDUNG

(21) Anmeldenummer: **79102077.9**

(22) Anmeldetag: **22.06.79**

(51) Int. Cl.³: **H 04 L 5/22**, H 04 L 11/00, H 04 J 3/00

(30) Priorität: **05.07.78 DE 2829576**

(43) Veröffentlichungstag der Anmeldung: **09.01.80**
**Patentblatt 80/1**

(84) Benannte Vertragsstaaten: **AT CH NL SE**

(71) Anmelder: **SIEMENS AKTIENGESELLSCHAFT Berlin und München, Postfach 261, D-8000 München 22 (DE)**

(72) Erfinder: **Kleinert, Helmut, Stockmannstrasse 44, D-8000 München 71 (DE)**

(54) **Schaltungsanordnung zur Herstellung und Durchschaltung von Verbindungen zwischen Datenleitungen und einer Zeitmultiplexübertragungsstrecke.**

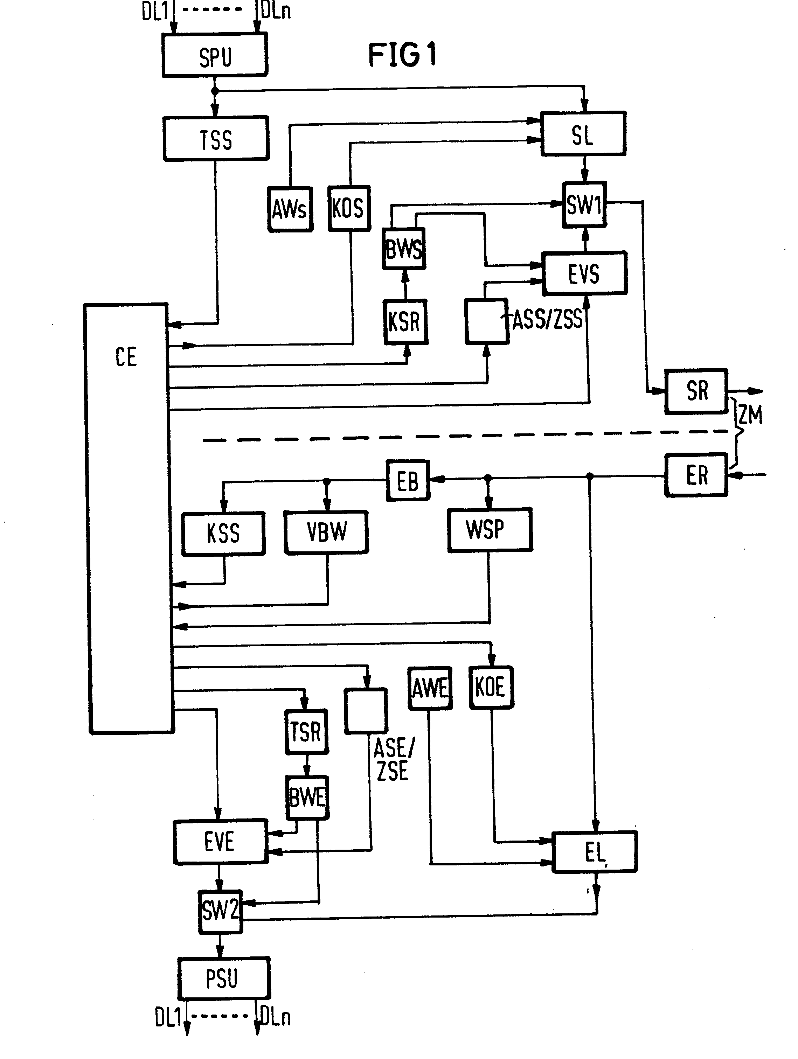

(57) Zur Verbindungsherstellung und Durchschaltung zwischen Datenleitungen und einer Zeitmultiplexstrecke mit envelopeweiser Übertragung sind Speicher (SL, EL) zur Aufnahme ankommender Envelopes, Speicher (EVS, EVE) zur Aufnahme einzufügender Envelopes, Speicher (TSS, KSS) zur Aufnahme der Zustände auf den Datenleitungen und Kanälen sowie Speicher (WSP) zur Aufnahme von Wahlinformationen vorgesehen; eine zentrale Steuerung (CE) wertet die Speicherinhalte zeitlich entkoppelt aus (Fig. 1).

EP 0 006 595 A1

ACTORUM AG

SIEMENS AKTIENGESELLSCHAFT     Unser Zeichen
Berlin und München     VPA 78 P 2 3 5 5 EUR

Schaltungsanordnung zur Herstellung und Durchschaltung
von Verbindungen zwischen Datenleitungen und einer
Zeitmultiplexübertragungsstrecke

Die Erfindung betrifft eine Schaltungsanordnung für
Fernschreib- und Datenvermittlungsanlagen zur Herstellung und Durchschaltung von Verbindungen zwischen
mehreren Datenleitungen und einer Zeitmultiplexstrecke
mit envelopeweiser Übertragung der Daten, in der eine
zentrale Steuereinheit durch Bewertung der Status- und
der Signalisierungsbit in den über die Datenleitungen
oder in den über die Zeitmultiplexstrecke ankommenden
Envelopes Kriterien für den Verbindungsaufbau, für die
Durchschaltung und für den Verbindungsabbau erzeugt.

In der Fernschreib- und Datenübertragungstechnik werden
in zunehmendem Maße zur gebündelten Übertragung Zeitmultiplexsysteme eingesetzt. Diese Systeme können dabei
nach dem Prinzip der Bitverschachtelung oder nach dem
Prinzip der envelopeweisen Verschachtelung arbeiten.
In einem Zeitmultiplexsystem mit envelopeweiser Verschachtelung werden die übertragenen Informationen taktgesteuert
in einem vorgegebenen Zeitraster in Form ganzer Bitgrup-

Fk 1 Bke    27.6.78

pen, der sogenannten Envelopes, durchgeschaltet und übertragen. Ein Envelope besteht aus einer Reihe von Datenbits, die durch zwei zusätzliche Bits, einem Statusbit und einem Synchronisierbiet, ergänzt werden.

Das Statusbit dient zur Unterscheidung, ob es sich bei den Datenbits um Daten einer Nachricht oder um vermittlungstechnische Signalisierungskriterien handelt. Das Synchronisierbit dient zur fortlaufenden Kontrolle des Envelopesynchronismus. Envelopeweise verschachtelte Zeitmultiplexsysteme basieren in der Regel auf einem Gesamtbitstrom von 64 kbit/s, der unter Berücksichtigung der gewählten Envelopelänge die Bildung einer Reihe von Kanälen mit gleicher oder mit verschiedener Übertragungsgeschwindigkeit gestattet. In Datennetzen, die mit envelopeweise verschachtelter Zeitmultiplex-übertragungstechnik arbeiten, ist es zweckmäßig, den von den Datenendgeräten kommenden Verkehr konzentriert an die einzelnen Vermittlungsknoten heranzuführen. Dazu müssen die auf mehreren synchron betriebenen Multiplexstrecken eintreffenden Envelopes gesteuert und unter Beachtung vermittlungstechnischer Kriterien behandelt werden. Diese Behandlung umfaßt die Ableitung der Vermittlungskriterien aus den ankommenden Daten, das schritthaltende Einfügen von Envelopes auf belegten Datenleitungen oder Kanälen während des Verbindungsaufbaues, das Einfügen von sogenannten Leerenvelopes auf nichtbelegten Datenleitungen oder Kanälen, das Durchschalten von Envelopes während des durchgeschalteten Zustands der Verbindungen in beiden Richtungen und die Erkennung eines Auslösekriteriums sowie das Trennen der durchgeschalteten Verbindung.

Die Erfindung bezieht sich auf eine solche Schaltungsanordnung zur Herstellung und Durchschaltung von Verbindungen für Daten zwischen mehreren Datenleitungen

0006595

und einer Zeitmultiplexübertragungsstrecke mit envelopeweiser Übertragung der Daten. Der Erfindung liegt die
Aufgabe zugrunde, die vermittlungstechnischen Prozeduren
entkoppelt von den hohen Echtzeitanforderungen der auf
den Datenleitungen und auf der Zeitmultiplexübertragungsstrecke ankommenden Envelopeströme programmgesteuert durchführen zu können.

Diese Aufgabe wird gemäß den Merkmalen des gekennzeichneten Teiles im Patentanspruch 1 gelöst. Weitere im Rahmen der Erfindung liegende Merkmale sind durch die in
den Unteransprüchen angegebenen Maßnahmen gekennzeichnet.

Die Vorteile der erfindungsgemäßen Schaltungsanordnung
liegen vor allem darin, daß einerseits die zur Durchführung von vermittlungstechnischen Aktivitäten erforderlichen Auswertungen der Zustände auf den Datenleitungen und auf den Kanälen der Zeitmultiplexübertragungsstrecke in der Verbindungsaufbau- und in der Verbindungsabbauphase in einem von der zentralen Steuerung unabhängigen Teil stattfinden und daß andererseits die Ergebnisinformationen der zentralen Steuerung, die zur
Steuerung der Verbindung, Herstellung und während einer
Durchschaltung erforderlich sind, in einen von der
zentralen Steuerung unabhängigen Teil übertragen und
dort ausgewertet werden. In beiden Fällen führt das
dazu daß die internen Abläufe in der zentralen Steuerung im Verhältnis Vermittlungsphase zu Datenübertragungsphase zeitlich gedehnt werden können und somit
eine Entkopplung von den hohen Echtzeitanforderungen bei
der Behandlung und bei der Steuerung der Envelopeströme
ermöglichst wird. Als zentrale Steuerung kann dann
beispielsweise ein bekannter Mikroprozessor eingesetzt
werden. Ein weiterer Vorteil besteht darin, daß die
durchzuschaltenden Envelopes in einer solchen Weise geordnet in einen Sendeenvelopespeicher eingeschrieben werden, daß sie mit Hilfe einer einfachen Zähleranordnung zu einem abgehenden Multiplexstrom zusammengefügt werden können. Dieser Vorteil betrifft sowohl die Bewertung der über die Zeitmultiplexstrecke ankommenden als auch die Bewertung der über die Datenleitungen ankommenden Multiplexströme. Die Schaltungsanordnung ist sowohl für (8+2)-Envelopes als auch für (6+2)-Envelopes einsetzbar. Schließlich besteht ein weiterer Vorteil in der einfachen Anpassung an unterschiedliche Aufteilungen der Geschwindigkeitsklassen eines Gesamtrahmens.

Die Erfindung wird im folgenden anhand eines in der Zeichnung dargestellten Ausführungsbeispiels erläutert. Dabei zeigt

Fig. 1    ein Blockschaltbild der Gesamtanordnung, während in
Fig. 2    Einzelheiten des sendeseitigen Teils und in
Fig. 3    Einzelheiten des empfangsseitigen Teils der
          Anordnung dargestellt sind.

Das in Fig. 1 dargestellte Ausführungsbeispiel enthält auf der Sendeseite SE in Richtung zu den Datenleitungen DL1 bis DLn einen Serienparallelumsetzer SPU und in Richtung zur Zeitmultiplexübertragungsstrecke ZM, die im folgenden Übertragungsstrecke genannt wird, ein Senderegister SR, beispielsweise ein Schieberegister. Über die Datenleitungen DL1 bis DLn, die beispielsweise zu hier nicht dargestellten 16 Kanalbaugruppen führen, treffen rahmen- und envelopesynchron Envelopebitströme, beispielsweise 60 Kbit/s-Bitströme ein. Über die Übertragungsstrecke ZM wird beispielsweise ein 60-kbit/s-Bitstrom an eine hier nicht dargestellte übergeordnete Vermittlungsstelle abgegeben. Dieser Bitstrom ist ebenfalls rahmen und envelopesynchron. Die Takte für die Senderichtung werden von der Vermittlungsstelle über die Übertragungsstrecke ZM an den Sendeteil SE übertragen.

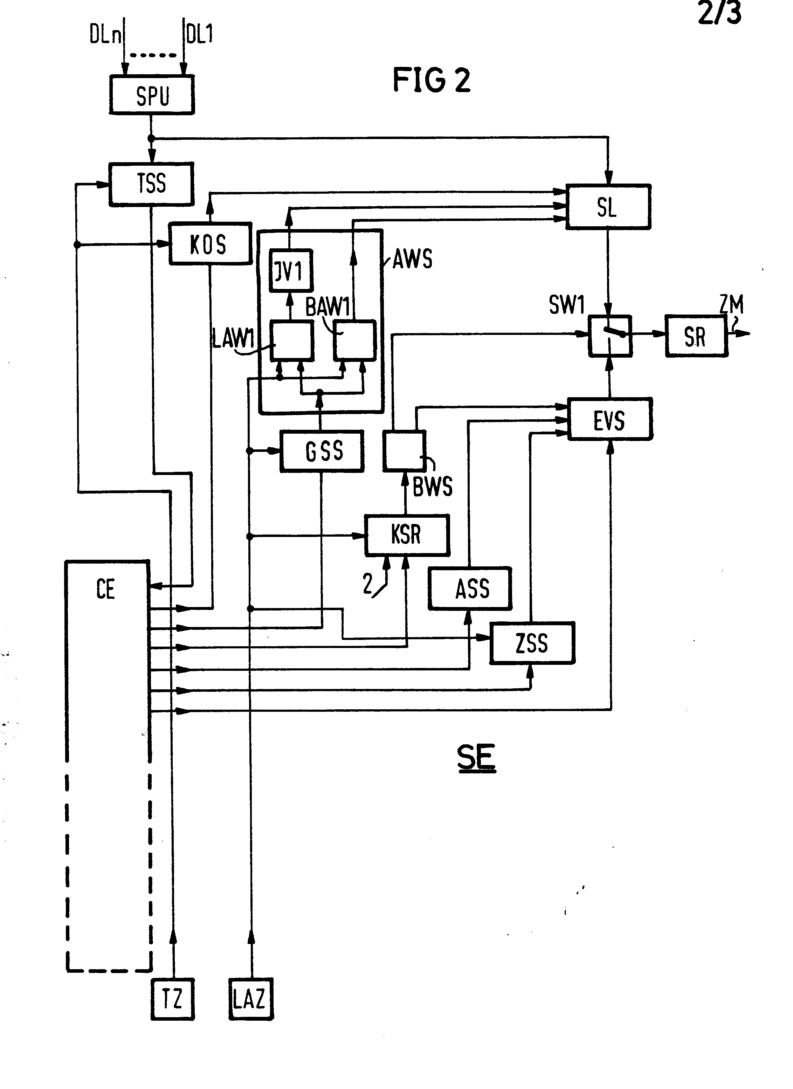

Im sendeseitigen Teil SE ist weiter ein Sende-Envelopespeicher SL vorgesehen, in den die über die Datenleitungen DL1 bis DLn eintreffenden Envelopes in einer bestimmten Weise, auf die später anhand von Fig. 2 eingegangen wird, übernommen werden. Zur Adressierung des
Sende-Envelopespeichers SL ist ein Kanalzuordner KOS
und eine Auswahlschaltung AWS vorgesehen. Weiterhin ist
ein Teilnehmerstatusspeicher TSS vorhanden, der ebenfalls
die eintreffenden Envelopes aufnimmt. Sowohl der Teilnehmerstatusspeicher TSS als auch der Kanalzuordner KOS
sind mit einer zentralen Steuerung CE verbunden, in
der durch Übernahme und Bewertung des Statusbits der im
Teilnehmerstatusspeicher TSS enthaltenen Envelopes der
jeweilige Zustand der Datenleitung festgestellt wird,
z.B. ob es sich um eine durchgeschaltete oder um eine
im Auf- bzw. Abbauzustand befindliche Verbindung handelt. Die Zuordnung zwischen einer Datenleitung DL1 bis
DLn und einem abgehenden Kanal der Übertragungsstrecke
ZM wird während des Verbindungsaufbaues in hier nicht
dargestellter Weise in der zentralen Steuerung CE gebildet und in den Kanalzuordner KOS eingetragen. Zur Einfügung von Envelopes in den abgehenden Bitstrom enthält
die Anordnung einen Einfügeenvelopespeicher EVS und zu
dessen Steuerung die Adressierungsschaltmittel ASS/ZSS
sowie ein Kanalstatusregister KSR, die beide jweils
von der zentralen Steuerung CE aus beschrieben werden.
Dem Kanalstatusregister KSR ist ein Schaltbewerter BWS
nachgeschaltet, der stets dann aktiviert wird, wenn
Envelopes in den abgehenden Bitstrom einzufügen sind.
In diesem Falle ist der Einfügeenvelopespeicher EVS
eingeschaltet und über eine Schaltweiche SW1 mit dem
Senderegister SR verbunden.

Der Empfangsteil EE der Anordnung enthält analog zum Sendeteil einen Empfangs-Envelopespeicher EL, der die über ein Empfangsregister ER von der Übertragungsstrecke ZM eintreffenden Envelopes aufnimmt. Der ankommende Bitstrom wird enveloppeweise und bittaktgesteuert in das Empfangsregister ER übernommen und ebenfalls nach einem festen Schema in den Empfangs-Envelopespeicher EL eingeordnet. Auch auf der Empfangsseite ist ein Kanalzuordner KOE und eine Auswahlschaltung AWE sowie ein Geschwindigkeitsspeicher GSE vorgesehen. Der Kanalzuordner KOE enthält die in der zentralen Steuereinheit CE während des Verbindungsaufbaues dort ermittelten Zuordnungsinformationen. Der Empfangs-Envelopespeicher EL ist über eine Schaltweiche SW2 mit einem Parallel-Serienumsetzer PSU verbunden, über den die aus dem Empfangs-Envelopespeicher EL ausgelesenen Envelopes auf die einzelnen Datenleitungen DL1 bis DLn verteilt werden. Zur Weitergabe der Envelope auf die einzelnen Datenleitungen DL1 bis DLn werden im Parallelserienumsetzer PSU in hier nicht dargestellter Weise die Envelopes in den Datenleitungen DL1 bis DLn zugeordnete Speicher übertragen, aus diesen bittaktgesteuert ausgelesen und somit die einzelnen Bitströme auf den Datenleitungen DL1 bis DLn erzeugt.

Zur Ermittlung der Kanalzustände auf der Übertragungsstrecke ZM ist ein Envelopebewerter EB vorgesehen, der die Datenbits jedes eintreffenden Envelopes überprüft. Das Auswerteergebnis wird zusammen mit dem Statusbit des betreffenden Envelopes in den Kanalstatusspeicher KSS eingetragen. Die zentrale Steuereinheit CE übernimmt den Inhalt des Kanalstatusspeichers KSS und kann damit die den Verbindungsaufbau und den Verbindungsabbau kennzeichnenden Zustände der einzelnen Kanäle der Übertragungsstrecke/zeitlich entkoppelt bewerten.

Zur Einfügung von Envelopes in den Bitstrom der einzelnen Datenleitungen DL1 bis DLn ist analog zur Sendeseite ebenfalls ein Einfüge-Envelopespeicher EVE vorgesehen, der von der zentralen Steuereinheit CE aus mit den einzufügenden Envelopes beschrieben wird. Die Steuerung der Envelopeeinfügung geschieht durch Bewertung der in einem Teilnehmerstatusregister TSR enthaltenen Informationen über die Zustände der Datenleitungen DL1 bis DLn. Diese Zustände werden in das Teilnehmerstatusregister TSR von der zentralen Steuereinheit CE eingetragen. Zur Adressierung des Einfügeenvelopespeichers EVE sind die Adressierungsmittel ASE/ZSE vorgesehen. Die Steuerung der Ausgabe aus dem Einfügeeinvelopespeicher EVE sowie die Steuerung der Schaltweiche SW2 geschieht über einen Schaltbewerter BWE, der die im Teilnehmerstatusregister TSR enthaltenen Informationen bewertet.

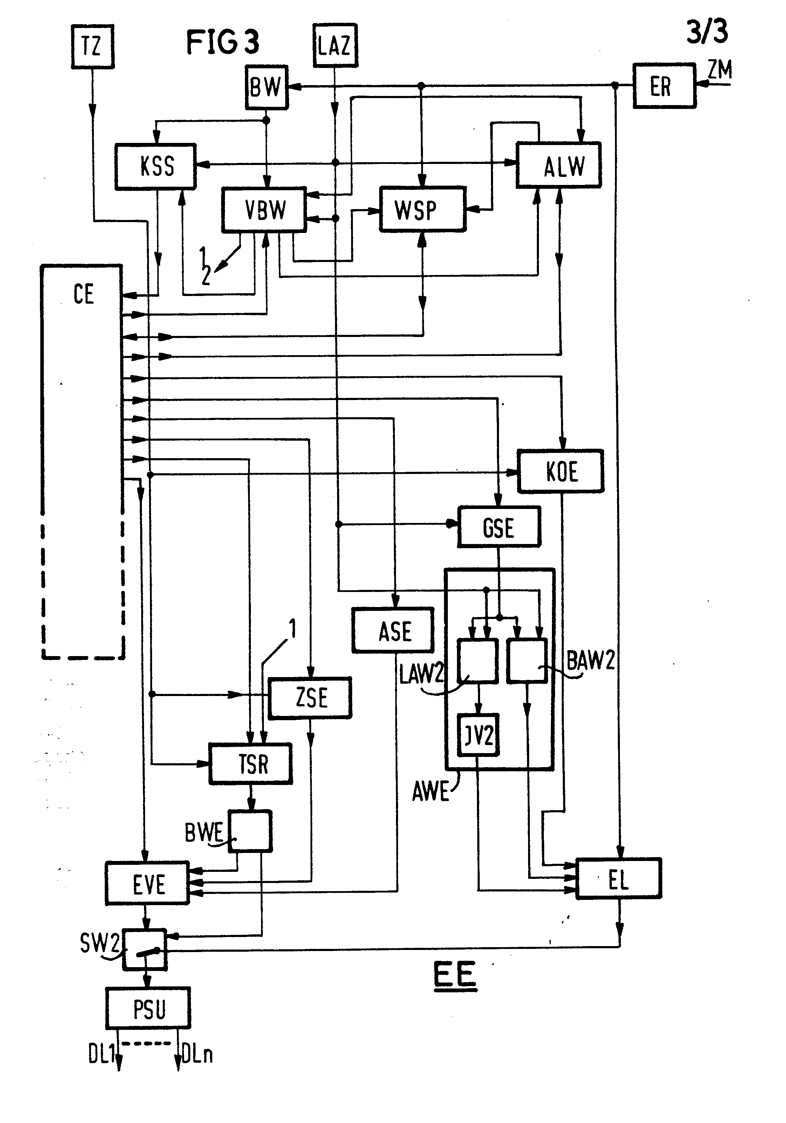

Neben der Durchschaltung eintreffender Envelopes und dem Einfügen von Envelopes hat der empfangsseitige Teil EE darüber hinaus die Aufgabe, aufgrund von eintreffenden Wahlinformationen bestimmte Datenleitungen bestimmten ankommenden Kanälen der Übertragungsstrecke zuzuordnen. Zur Aufnahme der über die Übertragungsstrecke ZM eintreffenden Wahlinformation ist ein Wählaufnahmespeicher WSP vorhanden, der entsprechend der Anzahl der Kanäle der Übertragungsstrecke in einzelne Bereiche aufgeteilt ist. Jeder dieser Bereiche kann eine solche Anzahl von Envelopes aufnehmen, die zur Übertragung der Wahlinformation vorgesehen sind. Zur Steuerung des Wahlspeichers WSP dient eine Verbindungsendebewertungsschaltung VBW, die ebenso wie der Kanalstatusspeicher KSS mit dem Ausgang des Empfangsregisters ER über den Envelopebewerter EB verbunden ist. Sowohl der Wählaufnahmespeicher WSP als auch die Verbindungsendebewertungsschaltung VBW werden in bestimmten Zeitabständen von der zentralen Steuerung CE abgefragt, ohne daß dafür die exakte Einhaltung von vorgegebenen engen Zeitkriterien berücksichtigt werden müssen. Weitere Einzelheiten des empfangsseitigen Teiles werden später anhand von Fig. 3 beschrieben.

Im folgenden wird nun die Wirkungsweise der Schaltungsanordnung nach Fig. 1 beschrieben, wobei zunächst die Sendeseite SE betrachtet wird. Dazu wird auf Fig. 2 verwiesen. Nach Abtastung der Datenleitungen DL1 bis DLn während eines Abtastzyklus stehen die Envelopes der n ankommenden Bitströme am Ausgang des Serienparallelumsetzers SPU in paralleler Form zur Verfügung. Der durch einen Teilnehmerzähler TZ adressierte Teilnehmerstatusspeicher TSS übernimmt die während des Abtastzyklus ankommenden Envelopes. Diese stehen zur weiteren Auswertung der zentralen Steuerung CE zur Verfügung. Der Teilnehmerzähler TZ wird entsprechend der Ausgabe der Envelopes aus dem Serien-Parallel-Umsetzer SPU weitergeschaltet. Aufgrund der spezifischen Zustände, die durch Datenbits und Statusbits gekennzeichnet sind, wird in hier nicht beschriebener Weise in der zentralen Steuerung CE festgestellt, ob für die betrachtete Datenleitung ein Verbindungsaufbau- oder ein Verbindungsabbauzustand vorliegt, ob es sich um eine durchgeschaltete Verbindung handelt oder ob sich die betrachtete Datenleitung im Ruhezustand befindet.

Es wird nun zunächst der erste Fall betrachtet, bei dem aufgrund der Bewertung des Statusbit festgestellt wird, daß sich die betrachtete Datenleitung im Verbindungsaufbauzustand befindet. In diesem Falle müssen vermittlungstechnische Aufgaben durchgeführt werden. Diese bestehen im wesentlichen darin, daß von der zentralen Steuerung CE an den Kanalzuordner KOS eine Information übergeben wird, die die Zuordnung zwischen der betreffenden Datenleitung und einem freien weiterführenden Kanal auf der Übertragungsstrecke ZM festlegt. Diese Information wird Kanaladresse genannt. Da der Teilnehmerstatusspeicher TSS und der Kanalzuordner KOS jeweils durch den Teilnehmerzähler TZ adressiert werden, steht die Kanaladresse nach ihrem Eintrag in den Kanalzuordner KOS jeweils zeitrichtig bis zum Ende einer Verbindung am Ausgang des Kanalzuordners KOS als Adresse für den Sendeenvelopespeicher SL zur Verfügung. Damit ist die Verbindung zwischen einer Datenleitung und einem bestimmten Kanal der Übertragungsstrecke ZM durchgeschaltet. Alle folgenden Envelopes, die über die betrachtete Datenleitung eintreffen, also sowohl die später einlaufenden Wählzeichen als auch die im durchgeschalteten Zustand eintreffenden Envelopes werden in den Sende-Envelopespeicher SL an der durch die Kanaladresse bestimmten Stelle eingespeichert.

Der Eintrag ankommender Envelopes in den Sende-Envelopespeicher SL geschieht in einer solchen Weise, daß beim Auslesen der dort gespeicherten Envelopes zu einem späteren Zeitpunkt ein zentraler abgehender Bitstrom auf der Übertragungsstrecke ZM gebildet wird. Das wird mit Hilfe eines entsprechend dem Envelopetakt auf der Übertragungsstrecke ZM fortgeschalteten Auswahlzählers LAZ, des Geschwindigkeitsspeichers GSS und der Auswahlschaltung AWS in folgender Weise erreicht. Der Geschwindigkeitsspeicher GSS enthält die Informationen über die für die angeschlossenen Datenleitungen DL1 bis DLn vorgesehenen Geschwindigkeitsklassen. Diese Informationen werden von der zentralen Steuerung CE für jede der im Sende-Envelopespeicher SL vorhandenen Zellen dort eingetragen. Ist beispielsweise der Sende-Envelopespeicher SL in zwei Teile aufgeteilt, in denen jeweils 16 Bereiche mit jeweils acht Zellen vorgesehen sind, so.

können die zu einem Rahmen einer bestimmten Geschwindigkeitsklasse gehörenden Envelopes auf die 16 Bereiche eines Teiles des Sende-Envelopespeichers SL aufgeteilt werden. In diesem Falle enthält der Geschwindigkeitsspeicher GSS für jede der maximal 128 Zellen eines Teiles im Sende-Envelopespeicher SL eine entsprechende Information für die Geschwindigkeitsklassen. Zur Aufnahme von Envelopes in den Sende-Envelopespeicher SL wird nun der Geschwindigkeitsspeicher GSS zum einen über die vom Kanalzuordner KOS ausgelesene Kanaladresse und zum anderen entsprechend dem Stand des Auswahlzählers LAZ adressiert. Der Auswahlzähler LAZ wird abhängig vom Envelopetakt der Übertragungsstrecke ZM weitergeschaltet. Die Struktur des Auswahlzählers LAZ entspricht dem vorgesehenen Spektrum der Geschwindigkeitsklassen sowie der Aufteilung des Sende-Envelopespeichers SL. Über den Ausgang des Geschwindigkeitsspeichers GSS werden die in der Auswahlschaltung AWS angeordneten Bereichsauswahlschalter BAW1 und Listenauswahlschaltung LAW1 angesteuert. Über die Bereichsauswahlschaltung BAW1 wird der der entsprechenden Geschwindigkeitsklasse zugeordnete Bereich und über die Listenauswahlschaltung LAW1 sowie über einen dieser nachgeschalteten steuerbaren Inverter JV1 der für die Aufnahme von Envelopes aktuelle Teil im Sende-Envelopespeicher SL ausgewählt. Dazu ist der steuerbare Inverter JV1 jeweils bei der Aufnahme von Envelopes eingeschaltet, so daß durch Invertierung des höchstwertigen Adressenbits der von der Listenauswahlschaltung LAW1 abgegebenen Adresse sichergestellt ist, daß jeweils der Teil im Sende-Envelopespeicher SL für die Eintragung von Envelopes adressiert ist, aus dem gerade nicht gelesen wird. Solange einer Datenleitung DL1 bis DLn kein Kanal auf der Übertragungsstrecke ZM zugeordnet ist, wird das Beschreiben des Sende-Envelopespeichers SL verhindert, was beispielsweise durch ein besonderes Bit in der vom Kanalzuordner KOS abgegebenen Kanaladresse erreicht wird.

Die Durchschaltung von auf den Datenleitungen DL1 bis
DLn eintreffenden und im Sende-Envelopespeicher SL
in der beschriebenen Weise eingespeicherten Envelopes geschieht durch Auslesen des Sende-Envelopespeichers SL
und durch Aussendung der ausgelesenen Envelopes über
die Schaltweiche SW1 und das Senderegister SR. Die im
vorhergehenden beschriebene Einspeicherung ankommender
Envelopes gestattet es, den Sende-Envelopespeicher SL
nach einem immer gleichbleibenden Schema auszulesen
und damit den abgehenden zentralen Envelopestrom zusammenzustellen. Wie später erläutert wird, werden über
diejenigen abgehenden Kanäle der Übertragungsstrecke ZM,
die keiner Datenleitung DL1 bis DLn zugeordnet sind,
Festinformationen, sogenannte Leerenvelopes, ausgesendet. Die Adressierung des Sende-Envelopespeichers SL
für den Vorgang des Auslesens geschieht mit Hilfe der
Takte des Auswahlzählers LAZ, d.h. in Abhängigkeit vom
Envelope-Takt der Übertragungsstrecke ZM. Die Adressierung zum Auslesen aus jeweils einem Teil des Sende-
Envelopespeichers SL geschieht wiederum abhängig von der
aus dem Geschwindigkeitsspeicher GSS ausgelesenen Information über die Geschwindigkeitsklasse. Über die Bereichsauswahlschaltung BAW1 in der Auswahlschaltung AWS
wird dabei jeweils nur der einer bestimmten Geschwindigkeitsklasse zugeordnete Bereich eines Teiles im Sende-
Envelopespeicher SL adressiert. Die Auswahl des richtigen Teiles im Sende-Envelopespeicher SL individuell
für jede Geschwindigkeitsklasse für ein abwechselndes
Auslesen aus dem einen oder dem anderen Teil geschieht
über die Listenauswahlschaltung LAW1, wiederum abhängig
von der Geschwindigkeitsklasse derart, daß von den binär
codierten Ausgängen des Auswahlzählers LAZ der über den jeweils adressierten geschwindigkeitsabhängigen Bereich hinausgehende höherwertige Ausgang ausgewählt wird und als höchstwertiges Adressbit an den Sende-Envelopespeicher SL gelangt. Damit wird erreicht, daß individuell für jede Geschwindigkeitsklasse der entsprechende Bereich im Sende-Envelopespeicher SL umgeschaltet wird. Die Invertierung der Adresse durch den steuerbaren Inverter IV1 unterbleibt in diesem Falle, da dieser nur dann eingeschaltet ist, wenn in den Sende-Envelopespeicher SL eingeschrieben wird. Damit wird automatisch aus dem Teil des Sende-Envelopespeichers SL ausgelesen, in den gerade nicht eingeschrieben wird. Die aus dem Sende-Envelopespeicher SL ausgelesene Information gelangt über die Schaltweiche SW1 in das Senderegister SR und wird dort als fertiges Envelope durch den Bittakt der Übertragungsstrecke ZM ausgelesen. Von den Abläufen, die bei der Durchschaltung von Envelopes stattfinden, wird die zentrale Steuerung CE vollständig entlastet. Die beschriebene Zuordnung zwischen einer Datenleitung und einem freien Kanal der Übertragungsstrecke ZM, die über den Kanalzuordner KOS unter Mitwirkung der zentralen Steuerung CE stattfindet. gestattet es, daß diese Zuordnung ohne Kenntnis der Phasenlage der über die Datenleitungen und der Übertragungsstrecke übertragenen Envelopeströme durchgeführt werden kann.

Da der Geschwindigkeitsspeicher GSS durch die zentrale Steuereinheit CE beschrieben wird und seinerseits den Sende-Envelopespeicher SL steuert, ist eine flexible Anpassung an unterschiedliche Rahmenlängen in einfacher Weise insofern möglich, als in der zentralen Steuereinheit CE diese Werte beispielsweise in einem manuell änderbaren Festwertspeicher enthalten sind.

Neben der Durchschaltung von im Sende-Envelopespeicher SL enthaltenen Envelopes und deren Einfügung in den abgehenden Bitstrom ist es erforderlich, sendeseitig einzelne Envelopes oder Envelopefolgen zu erzeugen und in den zur übergeordneten Vermittlungsstelle abgehenden Envelopestrom einzufügen. Das muß beispielsweise dann erfolgen, wenn abgehende Kanäle nicht belegt sind, d.h. wenn diesen Kanälen keine Datenleitungen zugeordnet sind oder wenn zum übergeordneten Amt Signalisierungskriterien übertragen werden müssen. Das geschieht in der erfindungsgemäßen Anordnung in der Weise, daß die zentrale Steuerung CE zeitlich entkoppelt die einzufügenden Envelopes, die Adresse des betreffenden abgehenden Kanals und die Länge des Envelopetextes bildet und in den Einfüge-Envelopespeicher EVS einträgt. Die Einfügung selbst wird dann unabhängig von der weiteren Tätigkeit der zentralen Steuerung CE durchgeführt. Zur Steuerung der Einfügung von Envelopes oder von Envelopefolgen, aus dem Einfügeenvelopespeicher EVS in den abgehenden Bitstrom dient das Kanalstatusregister KSR, das von der zentralen Steuerung CE die Angaben über den Status der Kanäle der Übertragungsstrecke ZM erhält. Diese Angaben, die unter der Adresse jedes Kanals in binärcodierter Form vorliegen, enthalten Informationen, die in einem dem Kanalstatusregister KSR nachgeschalteten Schaltbewerter-BWS in Steuerkriterien für die Schaltweiche SW1 und für den Einfügeenvelopespeicher EVS umgesetzt werden. Diese Informationen beinhalten beispielsweise, daß keine Envelopes eingefügt werden (durchgeschalteter Zustand), daß eine Envelopefolge einzufügen ist und anschließend durchgeschaltet wird, daß eine Envelopefolge eingefügt wird und anschließend eine Dauersendung des an der letzten Stelle der Envelopefolge befindlichen Envelopes stattfinden soll, daß zyklisch Envelopefolgen eingefügt werden sollen, oder daß ein Envelopemuster in Dauersendung ausgesendet werden soll. Die Steuerung dieser Vorgänge geschieht mit den Takten des Auswahlzählers LAZ, über einen Zuordnungsspeicher ZSS und einen Adressenspeicher ASS sowie über das Kanalstatusregister KSR, die analog zu der Adressierung des Einfüge-Envelopespeichers EVS adressiert werden. Wird im Schaltbewerter BWS einer der erwähnten Einfügemodi erkannt, so wird die aus dem Zuordnungsspeicher ZSS und die aus einem Adressenspeicher ASS entnommene Adresse dem Einfüge-Envelopespeicher EVS zugeführt. Dort ist unter dieser Adresse ein Envelope oder eine Envelopefolge enthalten, die anstelle der aus dem Sende-Envelopespeicher SL ausgelesenen Envelope in das Senderegister SR übernommen werden soll. Die Schaltweiche SW1 wird dazu über den Schaltbewerter BWS umgesteuert. Die Adresse, die vom Adressenspeicher ASS abgegeben wird und die dort durch die zentrale Steuer-einheit CE individuell für jeden Bereich des Einfüge-Envelopespeichers EVS vorgegeben ist, wird bei jeder Adressierung um Eins erhöht, bis ein Endzustand erreicht ist, d.h. bis alle Envelopes einer Folge in den Bitstrom der Übertragungsstrecke ZM eingefügt sind. Das kann z.B. mit Hilfe eines Addierers erreicht werden, der die um Eins erhöhte Adresse bildet, die dann in einem Register zwischengespeichert und erneut in den Adressenspeicher ASS eingegeben wird. Auf diese Weise werden stets dann, wenn aus dem Sende-Envelopespeicher SL keine durchzuschaltenden Envelopes ausgelesen werden, Envelopes aus dem Einfüge-Envelopespeicher EVS über-nommen und in den Bitstrom der Übertragungsstrecke ZM eingefügt.

Zur Erläuterung der Vorgänge beim Empfang von über die Übertragungsstrecke ZM eintreffenden Envelopes und deren Verteilung auf n Datenleitungen DL1 bis DLn wird auf Fig. 3 verwiesen, in der Einzelheiten des empfangsseitigen Teils EE der Anordnung dargestellt sind. Die Zuordnung zwischen bestimmten ankommenden Kanälen der Übertragungsstrecke ZM und bestimmten Datenleitungen DL1 bis DLn wird von der zentralen Steuerung CE in den Kanalzuordner KOE eingetragen. Da dieser jeweils durch den Teilnehmerzähler TZ adressiert wird, steht die Zuordnungsinformation während der Dauer einer Verbindung stets zeitrichtig zur Verfügung.

Die Aufnahme der über die Übertragungsstrecke ZM eintreffenden Envelopes in den Empfangs-Envelopespeicher EL geschieht über die Auswahlschaltung AWE, in der wiederum eine Bereichsauswahlschaltung BAW2, eine Listenauswahlschaltung LAW2 und ein steuerbarer Inventer JV2 vorgesehen sind, in Zusammenarbeit mit einem Geschwindigkeitsspeicher GSE. Dieser enthält die in der zentralen Steuerung CE gebildeten und den vorgesehenen Geschwindigkeitsklassen auf der Übertragungsstrecke ZM entsprechenden Informationen. Wie anhand von Fig. 2 bei der Ausgabe von Envelopes aus dem Sende-Envelopespeicher beschrieben, erfolgt auch die Aufnahme eintreffender Envelopes in den Empfangs-Envelopespeicher EL nach einem vorgegebenen Schema jeweils in den Teil des Empfangs-Envelopespeicher EL, aus dem gerade nicht ausgelesen wird. Sowohl die Auswahlschaltung AWE als auch der Geschwindigkeitsspeicher GSE sind wiederum über den Auswahlzähler LAZ steuerbar.

Der Bitstrom für die angeschlossenen Datenleitungen DL1 bis DLn wird durch das Auslesen des Empfangs-Envelopespeicher EL gebildet. Dazu dient, wie anhand von Fig.2 für die Aufnahme von Envelopes in den Sende-Envelopespeicher beschrieben, ein Kanalzuordner KOE, der die in der zentralen Steuerung CE gebildten Zuordnungsinformationen zwischen bestimmten Kanälen der Übertragungsstrecke ZM und bestimmten Datenleitungen DL1 bis DLn enthält und der unter Adressierung durch den Teilnehmerzähler TZ diese jeweils zeitrichtig als Kanaladresse abgibt. Da beim Auslesevorgang wiederum der steuerbare Inventer JV2 eingeschaltet ist, ist die Trennung zwischen der Aufnahme und der Abgabe von Envelopes in und aus dem Empfangs-Envelopespeicher EL sichergestellt. Die in dieser Weise ausgelesenen Envelopes stehen über die Schaltweiche SW2 dem Parallel-Serien-Umsetzer PSU zur Verfügung und werden von dort aus den Datenleitungen DL1 bis DLn zugeordnete Speicher in nicht dargesteller Weise bittaktgesteuert auf die einzelnen Datenleitungen DL1 bis DLn ausgesendet. Dieser Übertragungsweg besteht jedoch lediglich für durchgeschaltete Verbindungen, d.h. für solche, bei denen eine Zuordnung zwischen einem ankommenden Kanal und einer weiterführenden Datenleitung bereits besteht. Zur Bildung derartiger Zuordnungsinformationen in der zentralen Steuerung CE für den empfangsseitigen Teil EE sind nicht nur Informationen erforderlich, die den aktuellen Zustand der Kanäle und der Datenleitungen angeben, sondern es werden darüberhinaus auch Wahlinformationen benötigt, da im absteigenden Verkehr jeweils eine bestimmte Datenleitung mit einem ankommenden Kanal verbunden werden muß. Um auch für diese Aufgaben die zentrale Steuerung CE weitgehend von der exakten Einhaltung der für diese Vorgänge vorgegebenen sehr engen Zeittoleranzen zu entlasten, ist ein Verbindungsendebewerter VBW und ein Wahlaufnahmespeicher WSP mit einem ihm zugeordneten Adressierungsschaltmittel, nämlich einem Adressenspeicher ALW, vorgesehen. Der Wählaufnahmespeicher WSP ist entsprechend der Anzahl der Kanäle der Übertragungsstrecke ZM in einzelne Bereiche aufgeteilt, die jeweils eine solche Anzahl von Envelopes aufnehmen können, wie zur Übertragung der Wahlinformation vorgesehen sind. Die Aufnahme von über einen Kanal eintreffende Wahlzeichen in den Wahlaufnahmespeicher WSP findet dabei jeweils nur dann statt, wenn sich der betreffende Kanal vorher im Ruhezustand befand, d.h. wenn vorher ein Verbindungsendekriterium erkannt worden war. Diese Aufgabe übernimmt der Verbindungsendebewerte VBW, der dazu über einen Envelopebewerter BW aktiviert wird. Dort wird das als Bestätigung eines von einem Teilnehmer ausgehenden Auslösewunsches vom übergeordneten Amt zurückgesendete Auslösebestätigungssignal erkannt. Im dem betreffenden Kanal zugeordneten Bereich des Adressenspeichers ALW wird daraufhin ein Zähler auf einen definierten Anfangswert gesetzt. Mit jedem weiteren eintreffenden Envelope, das als Auslösebestätigungskriterium erkannt wird, wird der Zählerstand im Adressenspeicher ALW um Eins erhöht. Im Verbindungsendebewerter VBW, der diesen Stand übernimmt, findet fortlaufend ein Vergleich mit einem von der zentralen Steuereinheit CE in den Verbindungsendebewerter VBW eingegebenen Zählerwert statt. Liegt ein positives Vergleichsergebnis vor, so wird dieser dem Verbindungsende entsprechende Zustand kanalindividuell in den Kanalstatusspeicher KSS übertragen, der Zählerstand im Adressenspeicher ALW gelöscht und der Wahlaufnahmespeicher WSP zur Aufnahme eintreffender Envelopefolgen vorbereitend eingeschaltet.

Im Verbindungsendebewerter VBW sind darüber hinaus Einrichtungen zur Abgabe bestimmter Bitmuster vorgesehen, die nach Erkennung eines Verbindungsendes eingeschaltet werden und diese Bitmuster in das Kanalstatusregister KSR der Sendeseite (Fig. 2) und in das Teilnehmerstatusregister TSR der Empfangsseite (Fig. 3) übertragen.

Auf der Sendeseite wird dadurch, wie beschrieben, die Einfügung von Envelopes oder von Envelopefolgen gesteuert. Dies gilt auch für die Empfangsseite, worauf später eingegangen wird. Die weitere Überwachung des Bereitzustandes der Datenleitungen und der Kanäle der Übertragungsstrecke sowie der Reaktion darauf erfolgen
durch die zentrale Steuereinheit CE, nachdem diese durch
Übernahme des Inhaltes aus dem Kanalstatusspeicher KSS
von der Verbindungsauslösung auf einen Kanal und durch
Auslesen des Teilnehmerstatusspeichers TSS von der
Verbindungsauslösung auf einer Datenleitung Kenntnis
erhält. Daraufhin werden auch die in den entsprechenden
Zellen der Kanalzuordner KOS bzw. KOE enthaltenen Zuordnungskriterien gelöscht. Der Wahlaufnahmespeicher WSP
ist somit stets zur Aufnahme von eintreffenden Envelopes,
die eine Wahlinformation darstellen, bereit, wenn vorher
für den betrachteten Kanal ein Verbindungsendekriterium
erkannt und ausgewertet wurde.

Treffen nach Herstellung dieses Zustandes Envelopes ein,
so wird durch Bewertung ihrer Status- und Datenbits
(keine 1- oder der 0-Dauerlage) im Envelopebewerter EB
die Verbindungsaufbauphase erkannt. Die darauffolgenden
Envelopes werden hintereinander in den Wahlaufnahmespeicher WSP an den entsprechenden kanalindividuellen
Bereichen eingeschrieben. Dazu wird die aus dem Adressenspeicher ALW entnommene Adresse bei Aufnahme jeweils
eines Envelopes in den Wahlaufnahmespeicher WSP z.B.
über einen Addierer um Eins erhöht und z.B. über ein
Register erneut in den Adressenspeicher ALW eingeschrieben, bis eine Endmarkierung des betreffenden Bereiches
im Wahlaufnahmespeicher WSP erreicht ist. Der Adressenspeicher ALW wird von der zentralen Steuereinheit CE in
bestimmten Abständen abgefragt, wobei festgestellt
wird, ob und wieweit ein Bereich im Wahlaufnahmespeicher WSP beschrieben ist. Aufgrund dieser Information
kann in der zentralen Steuereinheit CE eine Entscheidung
getroffen werden, ob die im Wahlaufnahmespeicher WSP enthaltenen Envelopes behandelt werden müssen. Im Ergebnis führt, in hier nicht näher erläuterter Weise, die Behandlung der Wahlinformation durch die zentrale Steuerung zur Bildung der vorher erwähnten Zuordnungsinformation, die in den Kanalordner KOE eingetragen und von dort als Kanaladresse zur Verfügung steht.

Die Einfügung von Envelopes in den Bitstrom der einzelnen Datenleithngen DL1 bis DLn erfolgt analog der anhand von Fig. 2 beschriebenen Prozedur für die Sendeseite. Zu diesem Zweck enthält der empfängsseitige Teil EE den Einfüge- Envelopespeicher EVE, der von der zentralen Steuereinheit CE aus mit den einzufügenden Envelopes beschrieben wird. Die Steuerung der Envelopeeinfügung geschieht durch Bewertung der in dem Teilnehmerstatusregister TSR enthaltenen Informationen über die Zustände der Datenleitungen DL1 bis DLn. Diese Zustände werden in das Teilnehmerstatusregister TSR von der zentralen Steuereinheit CE oder über den Verbindungsendebewerter VBW eingetragen. Das Teilnehmerstatusregister TSR wird ebenso wie die Adressierungsschaltmittel für den Einfüge- Envelopespeicher EVE, nämlich ein Zuordnungsspeicher ZSE und ein Adressenspeicher ASE, durch den Teilnehmerzähler TZ adressiert. Wie anhand von Fig. 2 bereits beschrieben, wird auch hier mit Hilfe der aus dem Zuordnungsspeicher ZSE ausgelesenen Adresse, die von der zentralen Steuereinheit CE eingeschrieben wurde, einer der Bereiche im Einfüge- Envelopespeicher EVE adressiert und damit die Zuordnung einer bestimmten Datenleitung zu einem bestimmten Bereich im Einfüge-Envelopespeicher EVE hergestellt. Über den Adressenspeicher ASE werden dann die einzelnen Zellen des adressierten Bereiches im Einfüge-Envelopespeicher EVE derart adressiert, daß durch Umschaltung der Schaltweiche SW2 ein einzelnes Envelope oder eine Envelopefolge aus dem Einfüge-Envelopespeicher EVE anstelle der aus
dem Empfangs-Envelopespeicher EL ausgelesenen Envelopes in den Parallel-Serienumsetzer PSU gelangt.
Die Steuerung der Ausgabe aus dem Einfüge-Envelopespeicher EVE sowie die Steuerung der Schaltweiche SW2
geschieht über den Schaltbewerter BWE, der die im Teilnehmerstatusregister TSR enthaltenen Informationen bewertet.

Die anhand ihrer Funktion beschriebene Anordnung ermöglicht es, die zur Steuerung von Verbindungen zwischen
einer Vielzahl von Datenleitungen und einer gemeinsamen
Übertragungsstrecke in beiden Richtungen notwendigen Abläufe mit Hilfe einer zentralen Steuerung von den hohen
Realzeitanforderungen dieser Vorgänge zeitlich entkoppelt
durchzuführen. Sämtliche Vorgänge mit hoher Realzeitanforderung werden von den Einrichtungen der Anordnung
auf der Sende- und der Empfangsseite zeitgerecht durchgeführt. Das gilt sowohl für die den Verbindungsaufbau
und den Verbindungsabbau kennzeichnenden Zustände auf
den Datenleitungen und auf den Kanälen der Übertragungsstrecke und für die Durchschaltung von Envelopes
während einer Verbindung als auch für die Einfügung
von Envelopes in beiden Richtungen. Als zentrale Steuereinheit kann deshalb ein üblicher Mikroprozessor Verwendung finden, der die zum Verbindungsaufbau und zum
Verbindungsabbau erforderlichen Prozeduren mit Hilfe
eines gespeicherten Programmes abhängig vom jeweiligen
Zustand der einzelnen Datenleitungen und damit der
Teilnehmer bzw. der Kanäle der Übertragungsstrecke
und der einzelnen in den erwähnten Speichern registrierten Vermittlungsphasen steuert. Anlagenspezifische
Parameter, beispielsweise Angaben über die Geschwindigkeitsaufteilung der einzelnen Kanäle, können dabei in
externen Festwertspeichern enthalten sein oder sie können direkt aus den über die Datenleitungen angeschalteten Kanalgruppen, beispielsweise in bestimmten Zeitintervallen programmgesteuert, abgefragt werden.

Die beschriebene Schaltungsanordnung stellt hinsichtlich ihrer Funktion einen Vermittlungskonzentrator dar, der beispielsweise zur Erhöhung der Ausfallsicherheit auch verdoppelt eingesetzt werden kann. Die Verdopplung kann auch zweckmäßig sein, um zwei zentrale Multiplexströme zu bilden. In diesem Falle ist es erforderlich, daß die Steueranweisungen der beiden zentralen Steuereinzeiten an beide Vermittlungskonzentratoren zeitlich synchron gesendet werden, und daß die Abläufe gleichzeitig in beiden Vermittlungskonzentratoren durchgeführt werden. Das kann in der Weise erreicht werden, daß bei aufsteigendem Verkehr zunächst die zentrale Steuereinheit des einen Vermittlungskonzentrators die Übertragungskanäle auslastet und die andere zentrale Steuereinheit über ihren Vermittlungskonzentrator dann steuernd eingreift, wenn dem ersten Vermittlungskonzentrator keine Übertragungskapazität mehr zur Verfügung steht. Im Ruhezustand versorgt die eine zentrale Steuereinheit alle Teilnehmer und die Kanäle ihrer eigenen Übertragungsstrecke. Die andere Steuereinheit steuert dann nur die Einfügung von Leerenvelopes in ihren zentralen Multiplexstrom. Die Rufbearbeitung für den aufsteigenden Verkehr führt die erste zentrale Steuereinheit geschwindigkeitsklassenabhängig solange durch, solange Kanäle der betreffenden Geschwindigkeit auf ihrer eigenen Übertragungsstrecke frei sein. Sind alle Kanäle einer Geschwindigkeitsklasse belegt, so wird dieser Zustand erkannt und die andere zentrale Steuereinheit führt die Bearbeitung der abgehenden Rufe geschwindigkeitsabhängig durch. Dazu ist es notwendig, daß stets dann, wenn ein Teilnehmerruf durch die zweite zentrale Steuereinheit ausgewertet wird, dies der ersten zentralen Steuereinheit gemeldet wird, damit dort das Aussenden von Leerenvelopes zu dem betreffenden Teilnehmer von diesem Zeitpunkt an von der zweiten zentralen Steuereinheit durchgeführt wird. Diese Umschaltung muß in beiden Vermittlungskonzentratoren gleichzeitig vorgenommen werden. Ebenso muß die Zuständigkeit für die Bedienung bestimmter Teilnehmer von der ersten auf die zweite zentrale Steuereinheit übergehen, wenn vom übergeordneten Amt ein Ruf über die zur zweiten zentralen Steuerinheit zugehörigen Übertragungsstrecke eintrifft.

7 Patentansprüche
3 Figuren

<u>Patentansprüche:</u>

1. Schaltungsanordnung für Fernschreib- und Datenvermittlungsanlagen zur Herstellung und Durchschaltung von Verbindungen zwischen mehreren Datenleitungen und einer Zeitmultiplexstrecke mit envelopeweiser Übertragung der Daten, in der eine zentrale Steuereinheit durch Bewertung der Status- und der Signalisierungsbit in den über die Datenleitungen oder in den über die Zeitmultiplexstrecke ankommenden Envelopes Kriterien für den Verbindungsaufbau, für die Durchschaltung und für den Verbindungsabbau erzeugt,

d a d u r c h   g e k e n n z e i c h n e t, daß zur Aufnahme der über Datenleitungen (DL1 bis DLn) und der über die Zeitmultiplexstrecke (ZM) eintreffenden Envelopes ein Sende- und ein Empfangsenvelopespeicher (SE, EL) und zu deren Adressierung ein die in der zentralen Steuerung (CE) gebildeten Zuordnungskriterien aufnehmender Kanalzuordner (KOS, KOE) sowie eine Auswahlschaltung (AWS, AWE) vorgesehen ist,

daß der Sende-Envelopespeicher (SL) eingangsseitig an die ankommenden Datenleitungen (DL1 bis DLn) und ausgangsseitig über eine Schaltweiche (SW1) an ein Senderegister (SR) der Zeitmultiplexstrecke (ZM) und der Empfangs-Envelopespeicher (EL) eingangsseitig an ein Empfangsregister (ER) der Zeitmultiplexstrecke (ZM) und ausgangsseitig über eine Schaltweiche (SW2) an die abgehenden Datenleitungen (DL1 bis DLn) anschaltbar ist,

daß in Richtung zu den Datenleitungen (DL1 bis DLn) und in Richtung zur Zeitmultiplexstrecke (ZM) jeweils ein Envelopeeinfügespeicher (EVS, EVE) vorgesehen ist, die die von der zentralen Steuerung (CE) zur Einfügung in den über die Zeitmultiplexstrecke (ZM) und in den über die Datenleitungen (DL1 bis DLn) auszusendenden Envelopströme gebildeten Envelopes übernehmen und die

über Adressierungsschaltmittel (ASS; ZSS, ASE, ZSE) und über die Zustände der Kanäle auf der Zeitmultiplexstrecke (ZM) und die Zustände auf den Datenleitungen (DL1 bis DLn) enthaltende Register (KSR, TSR) auswertende Schaltbewerter (BWS, BSE) ansteuerbar sind, wobei die Schaltbewerter (BWS, BWE) zugleich auch die Schaltweichen (SW1, SW2) umsteuert,

daß ein Teilnehmerstatusspeicher (TSS) zur Aufnahme der Zustände der Datenleitungen (DL1 bis DLn) und ein Kanalstatusspeicher (KSS) zur Aufnahme der Zustände der Kanäle der Zeitmultiplexstrecke (ZM) vorgesehen ist, die von der zentralen Steuerung (CE) abfragbar sind,

und daß zur kanalindividuellen Aufnahme von Wahlinformationen ein Wahlaufnahmespeicher (WSP) vorgesehen ist, der über ein das Ende einer Verbindungsdurchschaltung bewertendes Schaltmittel (VBW) einschaltbar und durch die zentrale Steuerung (CE) abfragbar ist.

2. Schaltungsanordnung nach Anspruch 1, d a d u r c h   g e k e n n z e i c h n e t, daß ein Teilnehmerzähler (TZ) vorgesehen ist, dessen Zähltakt dem Envelopetakt auf den Datenleitungen (DL1 bis DLn) entspricht und durch den der Teilnehmerstatusspeicher (TSS) und die die Zuordnungskriterien für die Aufnahme von Envelopes in den Sendeenvelopespeicher (SL) und für die Abgabe von Envelopes aus dem Empfangsenvelopespeicher (EL) enthaltenden Kanalzuordner (KOS, KOE) steuerbar sind,

und daß ein Auswahlzähler (LAZ) vorgesehen ist, dessen Zähltakt dem Envelopetakt auf der Zeitmultiplexstrecke (ZM) entsprechen und durch den der Kanalstatusspeicher (KSS) und die Auswahlschaltungen (AWS, AWE) steuerbar sind.

0006595

3.  Schaltungsanordnung nach Anspruch 1 und 2,
d a d u r c h   g e k e n n z e i c h n e t, daß der
Sende- und der Empfangsenvelopespeicher (SL, EL)
jeweils in mindestens zwei unabhängig ansteuerbare
Teile unterteilt sind,
daß jeder Teil eine durch die den verschiedenen für
die Übertragung auf den Datenleitungen (DL1 bis DLn)
und auf der Zeitmultiplexstrecke (ZM) vorgesehenen Geschwindigkeitsklassen entsprechende Anzahl von Speicherbereichen, z.B. 16, umfaßt,
daß die Auswahlschaltungen (AWS, AWE) jeweils eine
Bereichsauswahlschaltung (BAW1, BAW2) und eine Listenauswahlschaltung (LAW1, LAW2) enthalten,
daß den Auswahlschaltungen (AWS, AWE) jeweils ein Geschwindigkeitsspeicher (GSS, GSE) zugeordnet ist, der
die in der zentralen Steuerung (CE) gebildeten und den
verschiedenen Geschwindigkeitsklassen entsprechende Informationen enthält,
und daß der der Auswahlschaltung (AWS) auf der Sendeseite (SE) zugeordnete Geschwindigkeitsspeicher (GSS)
während der Abgabe von Envelops aus dem Sendeenvelopespeicher (SL) und der der Auswahlschaltung (AWE) auf
der Empfangsseite (EE) zugeordnete Geschwindigkeitsspeicher (GSE) während der Aufnahme von Envelopes in
den Empfangsenvelopespeicher (EL) durch den Auswahlzähler (LAZ) steuerbar ist.

4.  Schaltungsanordnung nach Anspruch 3, d a d u r c h
g e k e n n z e i c h n e t, daß die Auswahlschaltungen
(AWS, AWE) jeweils einen der Listenauswahlschaltung
(LAW1, LAW2) zugeordneten steuerbaren Inverter (IV1,
IV2) enthalten, der während der Aufnahme von Envelopes
in den Sendeenvelopespeicher (SL) bzw. in den Empfangs-
envelopespeicher (EL) eingeschaltet ist.

0006595

5. Schaltungsanordnung nach Anspruch 1, d a d u r c h g e k e n n z e i c h n e t, daß der Verbindungsendebewerter (VBW) und ein dem Wahlaufnahmespeicher (WSP) zugeordneter Adressenspeicher (ALW) durch den Auswahlzähler (LAZ) adressierbar sind,
daß der Verbindungsendebewerter (VBW) über einen die von den Kanälen der Zeitmultiplexstrecke (ZM) eintreffenden Envelopes bewertenden Envelopebewerter (EB) bei Eintreffen eines Auslösebestätigungssignals eingeschaltet ist, einen im adressierten Bereich des Adressenspeichers (ALW) angeordneten Zähler fortschaltet und einen Vergleich des Zählerstandes mit einem durch die zentrale Steuerung (CE) eingegebenen Zählerstandes durchführt,
und daß bei Erreichen des eingestellten Zählerstandes über den Verbindungsendebewerter (VBW) der Wahlaufnahmespeicher (WSP) zur Aufnahme von Wahlinformationen vorbereitend einschaltbar und der Zähler im Adressenspeicher (ALW) rücksetzbar ist.

6. Schaltungsanordnung nach Anspruch 5, d a d u r c h g e k e n n z e i c h n e t, daß der Wahlaufnahmespeicher (WSP) eine der Anzahl der Kanäle auf der Zeitmultiplexstrecke (ZM) entsprechende Anzahl von Bereichen aufweist, die über den Adressenspeicher (ALW) adressierbar sind,
daß mit dem Eintreffen jeweils eines Envelopes der Wahlinformation der Zähler im Adressenspeicher (ALW) fortschaltbar ist,
und daß der Zählerstand des Zählers im Adressenspeicher (ALW) durch die zentrale Steuerung (CE) abfragbar ist.

7. Schaltungsanordnung nach Anspruch 5, d a d u r c h
g e k e n n z e i c h n e t, daß der Verbindungsendebewerter (VBW) mit dem Kanalstatusspeicher (KSS), dem
Kanalstatusregister (KSR) und dem Teilnehmerstatusregister (TSR) verbunden ist,
und daß bei Erreichen des eingestellten Zählerstandes
Zustandskriterien über das Ende der Verbindungsdurchschaltung, beispielsweise in Form bestimmter Bitmuster,
übertragen werden.

FIG 1

FIG 2

0006595

2/3

SE

FIG 3

0006595

3/3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 3 989 892 (SHINICHIRO YOSHIDA)<br><br>+ Spalte 1, Zeilen 8 bis 60; Spalte 3, Zeilen 34 - 59; Spalte 4, Zeile 63 bis Spalte 5, Zeile 16, Figuren 1 und 4 +<br><br>-- | 1 |
| A | GB - A - 1 417 557 (PLESSEY)<br><br>+ Seite 1, Zeilen 9 bis 46; Seite 2, Zeilen 40 bis 95; Figur 1 +<br><br>-- | 1 |
| A | DE - B1 - 2 652 038 (SIEMENS)<br><br>+ Spalte 2, Zeilen 17 bis 45; Spalte 3, Zeile 67 bis Spalte 5, Zeile 17; Figuren 1 und 2 +<br><br>-- | 1 |
| A | DE - A - 2 422 622 (N. V. PHILLIPS)<br><br>+ Seite 1, Zeile 1 bis Seite 2, Zeile 1; Seite 8, Zeile 13 bis Seite 12, Zeile 5; Figur 1 +<br><br>-- | 1 |
| A | GB - A - 1 303 270 (STANDARD)<br><br>+ Seite 1, Zeile 9 bis Seite 2, Zeile 85; Figur 3 +<br><br>---- | 1,3 |

**KLASSIFIKATION DER ANMELDUNG (Int.Cl.²)**

H 04 L 5/22
H 04 L 11/00
H 04 J 3/00

**RECHERCHIERTE SACHGEBIETE (Int. Cl.²)**

H 04 L 5/22
H 04 L 11/00
H 04 L 11/02
H 04 J 3/00
H 04 J 3/02
H 04 Q 11/04
H 04 M 11/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 24-09-1979 | HAJOS |

EPA form 1503.1 06.78